# EUROPEAN PATENT APPLICATION

(11) **EP 2 375 323 A1**
(43) Date of publication of application: **12.10.2011**
(21) Application number: 11005472.3
(22) Date of filing: 03.10.2008
(51) Int. Cl.: G06F 9/445, G06F 12/00, G06F 11/14

(54) **Firmware image update and management**

(30) Priority: 04.10.2007 US 977529 P
(62) Divisional of application: 08835594.6
(71) Applicant: Openpeak Inc., Boca Raton, FL 33486 (US)
(72) Inventor: The designation of the inventor has not yet been filed
(74) Representative: Kenrick, Mark Lloyd

(57) **Abstract**

In a system that includes a primary processor and one or more secondary processors, an embodiment of the present invention allows the firmware of a secondary processor to be updated even if that processor is unstable due to a corruption of system software. An embodiment of present invention also enables a network-based firmware update of a processor or microcontroller in a system, such as a consumer electronics device, wherein the processor or microcontroller requires such updates to occur via a serial port.

## Description

### BACKGROUND OF THE INVENTION

### Field of the Invention

The invention generally relates to systems that update and manage firmware images used by processors.

### Background

Multi-processor systems, such as multi-processor consumer electronics devices, require a recoverable, foolproof technique for updating processor firmware without risking that the system will be rendered inoperable. In a multi-processor system that includes a primary processor and one or more secondary processors, not only must the system be able to update the firmware of the secondary processor(s), the system must also have the ability to re-update the firmware image if the update fails or the system becomes unstable due to a corruption of the boot image.

Furthermore, some processors restrict or do not support the ability to write to program or instruction memory, thereby inhibiting or encumbering the ability to update the firmware image. For example, some processors only support updating the firmware image via a special mode of operation in which the processor reads the new image via a serial port and writes it to flash memory. Consumer electronics devices that include such processors, such as some telephone handsets, generally do not support firmware updates. As device software increases in sophistication, it will be necessary for them to do so.

### BRIEF SUMMARY OF THE INVENTION

An embodiment of the present invention allows the firmware of one processor in a multi-processor system to be updated even if that processor is unstable due to a corruption of system software. For example, in a system that includes a primary processor and one or more secondary processors, an embodiment of the present invention allows the firmware of a secondary processor to be updated even if that processor is unstable due to a corruption of system software.

In particular, a method is described herein for updating firmware of a second processor in a system comprising a first processor and the second processor. In accordance with the method, the first processor loads a shared memory with a firmware image. The first processor then sends a command to the second processor to perform a boot process. Responsive to receiving the command, the second processor performs a boot process, wherein performing the boot process includes loading the firmware image from the shared memory. The foregoing method may further include executing a watchdog timer mechanism by the first processor, wherein the watchdog timer mechanism is configured to determine if the second processor has completed the boot process successfully.

A system is also described herein. The system includes a first processor, a second processor, and a shared memory coupled to the first processor and the second processor. The first processor is configured to load the shared memory with a firmware image and to send a command to the second processor to perform a boot process. The second processor is configured to perform a boot process responsive to receipt of the command, wherein performing the boot process include loading the firmware image from the shared memory. The first processor may be further configured to execute a watchdog timer mechanism, wherein the watchdog timer mechanism is configured to determine if the second processor has completed the boot process successfully.

An embodiment of the present invention also enables a network-based firmware update of a processor or microcontroller in a system, such as a consumer electronics device, wherein the processor or microcontroller requires such updates to occur via a serial port.

In particular, a method is described herein for updating a firmware image used by a first microcontroller in a system that includes the first microcontroller and a second microcontroller. In accordance with the method, the second microcontroller temporarily loads a new firmware image into a buffer. The second microcontroller then sends a first command to the first microcontroller. Responsive to receipt of the first command, the first microcontroller reads the new firmware image from the buffer via a serial port of the first microcontroller and writes the new firmware image to an instruction memory associated with the first microcontroller. In loading the new firmware image into the buffer, the second microcontroller may receive the new firmware image via a wired network link or a wireless network link.

The foregoing method may further include sending a message from the first microcontroller to the second microcontroller to indicate that the first microcontroller is ready to update the firmware image. The foregoing method may also include sending a second command from the second microcontroller to the first microcontroller and responsive to receipt of the second command by the first microcontroller, resuming a normal execution mode by the first microcontroller.

A system is also described herein. The system includes a first microcontroller, a second microcontroller connected to the first microcontroller, a buffer connected to the second microcontroller, and an instruction memory connected to the first microcontroller. The second microcontroller is configured to temporarily load a new firmware image into the buffer and to send a first command from the second microcontroller to the first microcontroller. The first microcontroller is configured to read the new firmware image from the buffer via a serial port of the first microcontroller and to write the new firmware image to the instruction memory responsive to receipt of the first command by the first microcontroller.

The foregoing system may further include a network link, such as a wired or wireless network link, and the second microcontroller may be further configured to acquire the network firmware image via the network link. The first microcontroller may also be further configured to send a message to the second microcontroller to indicate that the first microcontroller is ready to update the firmware image. The second microcontroller may also be further configured to send a second command to the first microcontroller, and the first microcontroller may be further configured to resume a normal execution mode responsive to receipt of the second command.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the relevant art(s) to make and use the invention.

FIG. 1 is a block diagram of a multi-processor system that facilitates the update of firmware in accordance with an embodiment of the present invention.

FIG. 2 depicts a flowchart of a method in a system comprising a first and second processor for updating firmware of the second processor.

FIG. 3 is a block diagram of a system in which a second microcontroller is used to load firmware into the instruction memory of a first microcontroller via a serial port of the first microcontroller in accordance with an embodiment of the present invention.

FIG. 4 depicts a flowchart of a method in a system comprising a first microcontroller and a second microcontroller for updating a firmware image used by the first microcontroller.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION OF THE INVENTION

### A. System and Method for Firmware Updates

As noted in the Background section above, multi-processor systems, such as multi-processor consumer electronics devices, require a recoverable, foolproof technique for updating processor firmware without risking that the system will be rendered inoperable. In a multi-processor system that includes a primary processor and one or more secondary processors, not only must the system be able to update the firmware of the secondary processor(s), the system must also have the ability to re-update the firmware image if the update fails or the system becomes unstable due to a corruption of the boot image. An embodiment of the present invention provides a mechanism for updating the firmware of a secondary processor in such a multi-processor system even if that processor is unstable due to a corruption of system software.

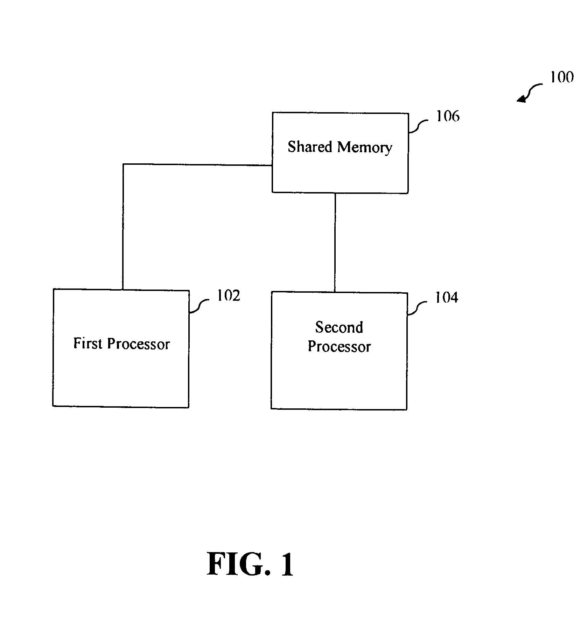

FIG. 1 is a block diagram of a multi-processor system 100 that facilitates the update of firmware in accordance with an embodiment of the present invention. In particular, system 100 allows the firmware of one processor in system 100 to be updated even if that processor is unstable due to a corruption of system software.

As shown in FIG. 1, multi-processor system 100 includes a first processor 102 and a second processor 104. In an embodiment, first processor 102 comprises a main processor and second processor 104 comprises an auxiliary processor. First processor 102 and second processor 104 are each communicatively connected to a shared memory 106, which in an embodiment comprises a boot memory. Shared memory 106 may comprise a non-volatile flash memory, although the invention is not so limited.

Second processor 104 is configured to boot from shared memory 106. As used herein, the term "boot" means to load and perform a sequence of operations required to place a processor in its normal operating state. First processor 102 is configured to populate shared memory 106 with the appropriate boot code for second processor 104. First processor 102 is further configured to trigger second processor 104 to initiate a boot. First processor 102 may trigger second processor 104 to initiate the boot by sending one or more messages via shared memory 106 or by sending one or more messages over a network or some other communication path between first processor 102 and second processor 104 (not shown in FIG. 1).

In accordance with an embodiment of the present invention, a watchdog timer mechanism may be executed by first processor 102 to ensure that second processor 104 has booted successfully and continues to run. This watchdog timer mechanism can be implemented in any of several well-known ways, such as via shared memory 106 or by sending network messages.

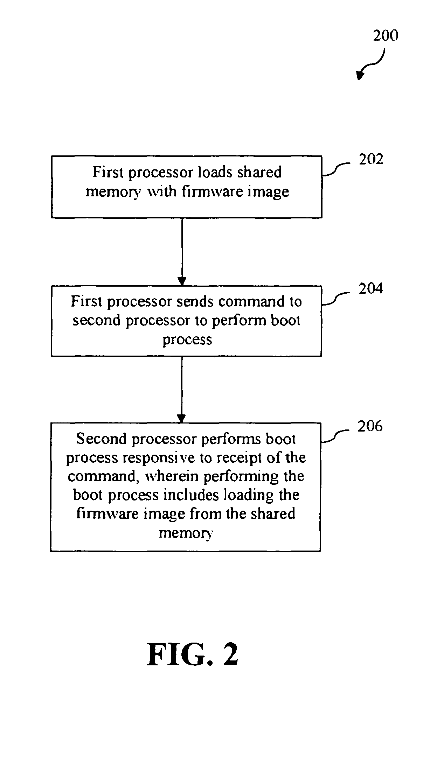

FIG. 2 depicts a flowchart 200 of a method in a multi-processor system comprising a first and second processor for updating firmware of the second processor in accordance with the foregoing description. Flowchart 200 will now be described with continued reference to system 100 of FIG. 1. However, the method of flowchart 200 is not limited to that implementation.

As shown in FIG. 2, the method of flowchart 200 begins at step 202 in which first processor 102 loads shared memory 106 with a firmware image. At step 204, first processor 102 sends a command to second processor 104 to perform a boot process. At step 206, responsive to the receipt of the command, second processor 104 performs a boot process, wherein performing the boot process includes loading the firmware image from shared memory 106.

In an embodiment, the method of flowchart 200 further includes the execution of a watchdog timer mechanism by first processor 102, wherein the watchdog timer mechanism is configured to determine if second processor 104 has completed the boot process successfully.

### B. System and Method for Firmware Image Management

As noted in the Background section above, some processors restrict or do not support the ability to write to program or instruction memory, thereby inhibiting or encumbering the ability to update the firmware image. For example, some processors only support updating the firmware image via a special mode of operation in which the processor reads the new image via a serial port and writes it to flash memory. Consumer electronics devices that include such processors, such as some telephone handsets, generally do not support such firmware updates. As device software increases in sophistication, it will be necessary for them to do so.

An embodiment of the present invention addresses the foregoing problem by temporarily loading new firmware into a buffer and then using a secondary microcontroller to set a main microcontroller into update mode before sending the new firmware to it.

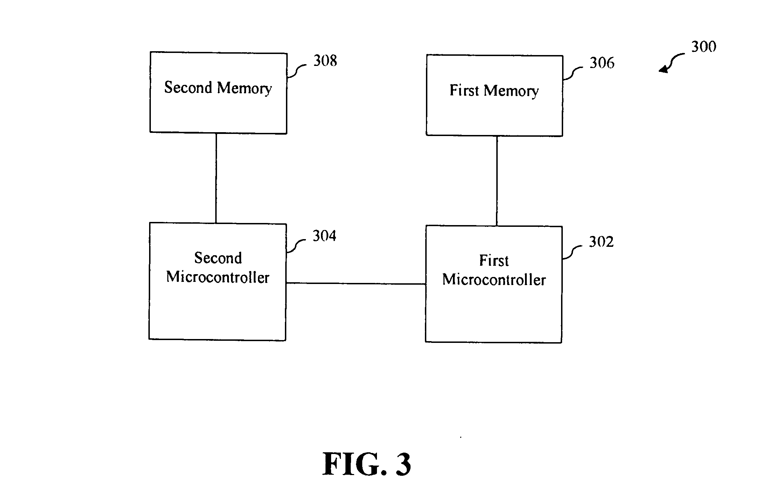

This approach will now be described with reference to a system depicted in FIG. 3. In particular, FIG. 3 is a block diagram of a system 300 that includes a first microcontroller 302 and a second microcontroller 304 that are communicatively connected to each other. In an embodiment, first microcontroller 302 comprises a main controller and second microcontroller 304 comprises a secondary controller. First microcontroller 302 is communicatively connected to a first memory 306 and second microcontroller 304 is communicatively connected to a second memory 308. In an embodiment, first memory 306 comprises an instruction memory and second memory 308 comprises a data memory or buffer.

System 300 of FIG. 3 provides a mechanism to support a network-based firmware update by first acquiring a new firmware image into second memory 308. The new firmware image is acquired by second microcontroller 304 and may be acquired over, for example, a wired or wireless network link. During this time, first microcontroller 302 is executing in a normal mode. When first microcontroller 302 is ready to update the firmware, it sends a signal to second microcontroller 304. Second microcontroller 304 then takes over, placing first microcontroller 302 into an update mode. During the update mode, second microcontroller 304 reads data from second memory 308 and writes it into first memory 306 via a serial port of first microcontroller 302. When the update process is complete, second microcontroller 304 then sends a command to first microcontroller 302 to resume executing in a normal execution mode.

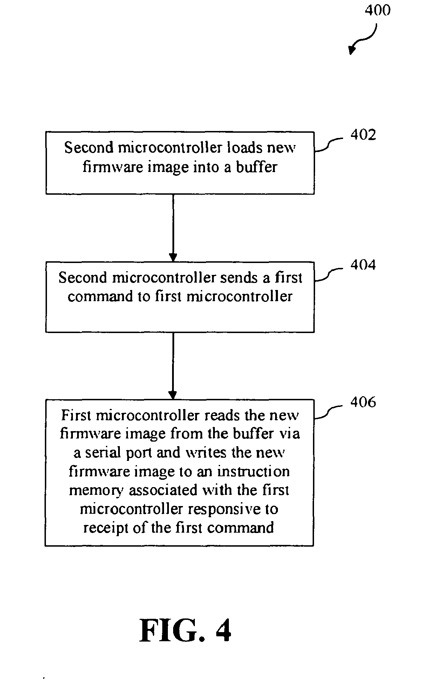

FIG. 4 depicts a flowchart 400 of a method in a system comprising a first microcontroller and a second microcontroller for updating a firmware image used by the first microcontroller in accordance with the foregoing description. Flowchart 400 will now be described with continued reference to system 300 of FIG. 3. However, the method of flowchart 400 is not limited to that implementation.

As shown in FIG. 4, the method of flowchart 400 begins at step 402 in which second microcontroller 304 loads a new firmware image into a buffer, which is represented by second memory 308 in FIG. 3. Loading the new firmware image into the buffer may include receiving the new firmware image via a wired network link or a wireless network link.

At step 404, second microcontroller 304 sends a first command from to first microcontroller 302.

At step 406, responsive to the receipt of the first command, first microcontroller 302 reads the new firmware image from the buffer via a serial port and writes the new firmware image to an instruction memory associated with the first microcontroller, which is represented by first memory 306 in FIG. 3.

The foregoing method may further include sending a message from first microcontroller 302 to second microcontroller 304 to indicate that first microcontroller 302 is ready to update the firmware image.

The foregoing method may also include sending a second command from second microcontroller 304 to first microcontroller 302 and, responsive to receipt of the second command by first microcontroller 302, resuming a normal execution mode by first microcontroller 302.

### C. Conclusion

While various embodiments of the present invention have been described above, it should be understood that they have been presented by way of example only, and not limitation. It will be understood by those skilled in the relevant art(s) that various changes in form and details may be made to the embodiments of the present invention described herein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. In a system comprising a first microcontroller and a second microcontroller, a method for updating a firmware image used by the first microcontroller, comprising:
loading a new firmware image into a buffer by the second microcontroller;
sending a first command from the second microcontroller to the first microcontroller; and
responsive to receipt of the first command by the first microcontroller, reading the new firmware image by the first microcontroller from the buffer via a serial port of the first microcontroller and writing the new firmware image by the first microcontroller to an instruction memory associated with the first microcontroller.

2. The method of claim 1, wherein loading the new firmware image into the buffer by the second microcontroller comprises:
receiving the new firmware image via a wired network link or a wireless network link.

3. The method of claim 1 or 2 , further comprising:
sending a message from the first microcontroller to the second microcontroller to indicate that the first microcontroller is ready to update the firmware image.

4. The method of claim 1 or 2, further comprising:
sending a second command from the second microcontroller to the first microcontroller; and
responsive to receipt of the second command by the first microcontroller, resuming a normal execution mode by the first microcontroller.

5. A system, comprising:
a first microcontroller;
a second microcontroller connected to the first microcontroller;
a buffer connected to the second microcontroller; and
an instruction memory connected to the first microcontroller;
wherein the second microcontroller is configured to load a new firmware image into the buffer and to send a first command from the second microcontroller to the first microcontroller, and
wherein the first microcontroller is configured to read the new firmware image from the buffer via a serial port of the first microcontroller and to write the new firmware image to the instruction memory responsive to receipt of the first command by the first microcontroller.

6. The system of claim 5, further comprising:
a network link;
wherein the second microcontroller is configured to acquire the firmware image via the network link.

7. The system of claim 6,
wherein the network link is one of a wired network link or a wireless network link.

8. The system of claim 5, 6 or 7, wherein the first microcontroller is further configured to send a message to the second microcontroller to indicate that the first microcontroller is ready to update the firmware image.

9. The system of claim 5, 6, 7 or 8, wherein the second microcontroller is further configured to send a second command to the first microcontroller, and
wherein the first microcontroller is further configured to resume a normal execution mode responsive to receipt of the second command.

10. In a system comprising a first processor and a second processor, a method for updating firmware of the second processor, comprising:
loading a shared memory with a firmware image by the first processor; sending a command from the first processor to the second processor to perform a boot process;
responsive to receipt of the command by the second processor, performing a boot process by the second processor, wherein performing the boot process includes loading the firmware image from the shared memory.

11. The method of claim 10, further comprising:
executing a watchdog timer mechanism by the first processor, wherein the watchdog timer mechanism is configured to determine if the second processor has completed the boot process successfully.

12. A system, comprising:
a first processor;
a second processor;
a shared memory coupled to the first processor and the second processor;
wherein the first processor is configured to load the shared memory with a firmware image and to send a command to the second processor to perform a boot process, and
wherein the second processor is configured to perform a boot process responsive to receipt of the command, wherein performing the boot process include loading the firmware image from the shared memory.

13. The system of claim 12, wherein the first processor is further configured to execute a watchdog timer mechanism, wherein the watchdog timer mechanism is configured to determine if the second processor has completed the boot process successfully.
